# EUROPEAN PATENT APPLICATION

(11) **EP 4 607 615 A1**
(43) Date of publication of application: **27.08.2025**
(21) Application number: 24878569.3
(22) Date of filing: 08.07.2024
(51) Int. Cl.: H01M 4/505, H01M 4/525, H01M 4/04, H01M 4/131, H01M 10/054, C01G 53/00

(54) **POSITIVE ELECTRODE MATERIAL, POSITIVE ELECTRODE SHEET, SODIUM ION BATTERY, MANUFACTURING METHOD THEREFOR, AND USE THEREOF**

(30) Priority: 17.10.2023 CN 202311344550
(71) Applicant: Natfound Technology Co., Ltd., Yueyang, Hunan 414000 (CN)
(72) Inventor: TU, Jian, Yueyang, Hunan 414000 (CN); XU, Xiongwen, Yueyang, Hunan 414000 (CN)
(74) Representative: Petraz, Gilberto Luigi
(86) International application number: PCT/CN2024/104201
(87) International publication number: WO 2025/081916

(57) **Abstract**

The present invention discloses a positive-electrode material, a positive-electrode plate, a sodium-ion battery, manufacturing methods therefor, and uses thereof. The positive-electrode material of the present invention presents an O3 phase and has a chemical formula of NaₙMn_{1-x-y-z}MₓZn_{y}Li_{z}O₂; where M is at least one of Cu²⁺, Ni²⁺, Cr²⁺, Fe³⁺, and Co²⁺; where, 0.5 ≤ x ≤ 0.6, 0.05 ≤ y ≤ 0.1, 0.005 ≤ z ≤ 0.05, 0.9 ≤ n ≤ 1.1, and x, y, z, and n meet a principle of electroneutrality numerically; and in the NaₙMn_{1-x-y-z}MₓZn_{y}Li_{z}O₂, all the element Zn is located at a site Wyckoff 3b in a form of Zn²⁺, and all the element Li is located at a site Wyckoff 4c in a form of Li⁺. Mn serves as a basic framework of a core material of the positive-electrode material. An active element M is doped at the side of Mn to provide capacity, and at the same time Li and Zn are distributed in lattices orderly. Moreover, the synergistic doping and coupling effects of non-active elements Li and Zn facilitate the oxidation/reduction reaction of the active element M and inhibit the unfavorable phase transformations during charging and discharging processes, thereby improving the capacity and cyclic stability of the positive-electrode material.

## Description

### TECHNICAL FIELD

The present invention relates to the technical field of methods or apparatuses for the direct transformation of chemical energy into electric energy, and more specifically relates to a positive-electrode material, a positive-electrode plate, a sodium-ion battery, a manufacturing method therefor, and use thereof.

### BACKGROUND

With the rapid advancing of automobile electrification, the huge demand for lithium-ion power batteries results in the loss of balance of supply and demand, and the continuous high price of lithium resources. On the other hand, with the advancing of the strategy "Carbon Dioxide Peaking and Carbon Neutrality", there is an urgent need for the development of sustainable energy sources dominated by photovoltaic and wind power; moreover, to reduce the phenomenon of abandoning wind and solar power, energy-storage batteries need to be configured urgently. Lithium-ion batteries play a dominant role in the energy-storage batteries at present; hence, the rapid development of the energy-storage industry further aggravates the consumption of lithium resources. Therefore, it is imperative to develop a novel energy-storage battery based on non-lithium-ion battery.

Compared with lithium-ion batteries, the sodium-ion batteries have the advantages such as low costs, rich resources, good safety, and eco-friendliness and thus, are more suitable for large-scale energy storage. The positive-electrode material is the key factor to restrict the performance of the sodium-ion batteries. Currently, substances suitable as the positive-electrode materials of sodium-ion batteries mainly include oxides, fluorides, sulfides, phosphates, and pyrophosphates, etc.; among them, layered transition metal oxides have the advantages such as high capacity, good rate capability, and long cycle life and thus, are more suitable as the positive-electrode material of the sodium-ion battery.

The layered transition metal oxide materials can be divided into types P2 and O3 according to the crystal structure. Compared with type P2, the type-O3 layered transition metal oxide can store more Na⁺ and have a higher reversible specific capacity within the same voltage range; that is, the capacity can be improved via rising the charging/discharging voltage. However, in the existing electrolyte solution systems, when the charging/discharging voltage is up to 4.1 V above, such a high voltage will not only decompose the electrolyte solution, but also will readily lead to the irreversible phase transformation of the type-O3 layered transition metal oxide to cause lattice distortion and oxygen loss, thereby resulting in the rapid attenuation of the reversible specific capacity and significantly reducing the cycle life. Even though the structural distortion of the positive-electrode material can be inhibited to a certain extent via reducing the charging/discharging voltage (the voltage range is lowered to 2-4 V) to improve the cyclic stability, the capacity of the positive-electrode material is hardly to break through 145 mAh/g within the voltage range. Therefore, there is in urgent need for a positive-electrode material having a high capacity and cyclic stability within the voltage of 2-4 V.

### SUMMARY

The objective of the present invention is to overcome the defects and shortcomings of the existing positive-electrode materials with layered transition metal oxide of the sodium-ion batteries, i.e., low capacity and poor cyclic stability within the voltage range of 2-4 V, provided is a positive-electrode material.

Another objective of the present invention is to provide a method for manufacturing a positive-electrode material.

A further objective of the present invention is to provide use of a positive-electrode material in a sodium-ion battery.

A further objective of the present invention is to provide a positive-electrode plate containing the aforesaid positive-electrode material.

A further objective of the present invention is to provide a sodium-ion battery containing the aforesaid positive-electrode material.

The aforesaid objectives of the present invention are achieved via the following technical solution:
The present invention seeks protection a positive-electrode material. The positive-electrode material presents an O3 phase (a crystal structure stacked via face-centered-cubic), and has a chemical formula of NaₙMn_{1-x-y-z}MₓZn_{y}Li_{z}O₂; M is at least one of Cu²⁺, Ni²⁺, Cr²⁺, Fe³⁺, and Co²⁺, where
0.5 ≤ x ≤ 0.6, 0.05 ≤ y ≤ 0.1, 0.005 ≤ z ≤ 0.05, 0.9 ≤ n ≤ 1.1, and x, y, z, and n meet a principle of electroneutrality numerically; and
in the NaₙMn_{1-x-y-z}MₓZn_{y}Li_{z}O₂, all the elements Zn are located at a site Wyckoff 3b in a form of Zn²⁺, and all the elements Li are located at a site Wyckoff 4c in a form of Li⁺.

The positive-electrode material of the present invention presents an O3 phase. Mn serves as a basic framework of a core material; an active element M is doped at the side of Mn to provide capacity. Moreover, the synergistic doping and coupling effects of non-active elements Li and Zn facilitate the oxidation/reduction reaction of the active element, increase the capacity of the positive-electrode material, and inhibit the unfavorable phase transformations during charging and discharging processes, thereby balancing the capacity and cycle life of the positive-electrode material well.

Li and Zn in the positive-electrode material of the present invention serve as non-active elements to play a supporting role. Li⁺ and Zn²⁺ are distributed in order and collaboratively doped to stabilize lattices and inhibit oxygen evolution, and in turn to facilitate the random distribution of the element Mn/M, thus improving the oxidation/reduction reaction of the M and inhibiting unfavorable phase transformations. The shortage of any doping is against the improvement of the overall performance of the positive-electrode material. Meanwhile, Zn²⁺ is co-doped, and Li⁺ and Zn²⁺ are distributed in order such that Li⁺ is located at a site Wyckoff 4c; moreover, the Li⁺ located within the LiO₄ tetrahedron is not prone to diffusing to Na⁺, which can effectively inhibit the distortion of the MnO₆/MO₆ octahedron and stabilize lattices during charging and discharging processes.

It further needs to be specified that the aforesaid element M will change its valence during charging and discharging processes; that is, the valence of Cu is +2 or +3; the valence of Ni is +2, +3, or +4; the valence of Cr is +2 or +3; the valence of Fe is +2 or +3; the valence of Co is +2 or +3; the valences of Na and Li are +1, and the valence of Mn is +4.

Specifically, the elements Zn and Li in the NaₙMn_{1-x-y-z}MₓZn_{y}Li_{z}O₂ show an ordered and gradient distribution, and their content in the lattices gradually decreases from outside to inside.

Studies have found as follows: when the element Zn is not doped, or Li⁺ and Zn²⁺ in the positive-electrode material are randomly distributed (i.e., the element Zn is not completely located at the site Wyckoff 3b in a form of Zn²⁺, and the element Li is not completely located at the site Wyckoff 4c in a form of Li⁺), Li⁺ is located at a site 3b of the LiO₆ octahedron, which is against the stabilization of the surface lattice (particularly, charged to high voltage). The gradient doping of Li and Zn can be beneficial to stabilizing the surface lattice to effectively inhibit lattice distortion and oxygen evolution as well as to effectively inhibit the positive-electrode material from being corroded by the electrolyte solution such that the positive-electrode material has a high specific capacity and long cycle life. Furthermore, gradient doping is further beneficial to lowering costs.

Specifically, elements Mn and M in the NaₙMn_{1-x-y-z}MₓZn_{y}Li_{z}O₂ are randomly distributed within lattices; when Mn and M are arranged in order, it will be against the stabilization of lattices and will inhibit the gradient doping and ordered distribution of Li and Zn.

Preferably, the positive-electrode material is a monocrystal structure having a particle size D50 of 4-8 µm.

Preferably, the M is at least two of Cu²⁺, Ni²⁺, Cr²⁺, Fe³⁺, and Co²⁺; and more preferably, the M is at least two of Cu²⁺, Ni²⁺, Cr²⁺, Fe³⁺, and Co²⁺, and one of them is Ni, with a molar ratio of the Ni to (M + Mn) is (0.23-0.29): 1.

Elements Cu, Ni, Cr, Fe, and Co are electrochemically active elements and may provide capacity via valence alternation. When M is co-doping of the above multiple elements (≥ 2 kinds), the unfavorable phase transformations can be effectively inhibited via the oxidation/reduction reactions in sequence, and the oxidation/reduction reactions may be facilitated mutually, which can provide capacity and enhance the structural stability of the positive-electrode material, thereby inhibiting the unfavorable phase transformations and Jahn-Teller distortion during charging and discharging, and enhancing the cyclic stability of the positive-electrode material.

The present invention further seeks protection for a method for manufacturing the aforesaid positive-electrode material, including the following steps:
S1, mixing and co-precipitating a manganese-containing compound and an element M-containing compound to obtain a precursor; and
S2, mixing the precursor in the S1 with a sodium-containing compound, a lithium-containing compound, and a zinc-containing compound well, and performing a high temperature solid-phase reaction to obtain the positive-electrode material;
where the element M in the S1 is at least one of Cu, Ni, Cr, Fe, and Co.

Specifically, the high temperature solid-phase reaction is performed at a temperature of 650-1,000°C for a duration of 10-20 h. Optionally, the high temperature solid-phase reaction is performed at a temperature of 900-1,000°C, and preferably 900-930°C.

Optionally, the precursor is at least one of a hydroxide, a carbonate, and an oxalate.

Optionally, the sodium-containing compound is at least one of sodium carbonate, sodium acetate, and sodium oxalate; the zinc-containing compound is at least one of zinc acetate, zinc oxalate, zinc carbonate, and zinc oxide; and the lithium-containing compound is at least one of lithium acetate, lithium oxalate, lithium carbonate, and lithium hydrate.

Use of the aforesaid positive-electrode material in a sodium-ion battery also falls within the protection scope of the present invention.

The present invention further seeks protection for a positive-electrode plate, including a current collector and a positive-electrode active material layer disposed on at least one side of the current collector; and the positive-electrode active material layer includes the aforesaid positive-electrode material.

The present invention further seeks protection for a sodium-ion battery, including a positive-electrode plate, a negative-electrode plate, a separator located between the positive-electrode plate and the negative-electrode plate, and an electrolyte solution; the positive-electrode plate includes the aforesaid positive-electrode material.

Compared with the prior art, the present invention has the following advantageous technical effects:
The positive-electrode material of the present invention presents an O3 phase. Mn serves as a basic framework of a core material; an active element M is doped at the side of Mn to provide capacity. In the meantime, Li and Zn are distributed into lattices in order; the synergistic doping and coupling effects of non-active elements Li and Zn facilitate the oxidation/reduction reaction of the active element M and inhibit the unfavorable phase transformations during charging and discharging processes, thereby improving the capacity and cyclic stability of the positive-electrode material well.

### BRIEF DESCRIPTION OF DRAWINGS

FIG. 1 shows an X-ray diffraction (XRD) pattern of a positive-electrode material in Example 1;
FIG. 2 shows a scanning electron microscopy (SEM) image of the positive-electrode material in Example 1;
FIG. 3 shows a charging-discharging curve graph of the positive-electrode material in Example 1;
FIG. 4 shows a cycle life graph of the positive-electrode material in Example 1;
FIG. 5 shows a charging-discharging curve graph of the positive-electrode material in Comparative Example 1; and
FIG. 6 shows a charging-discharging curve graph of the positive-electrode material in Comparative Example 2.

### DETAILED DESCRIPTION OF EMBODIMENTS

The present invention will be further specified in combination with detailed embodiments below, but the examples are not construed as limiting the present invention in any form. Raw materials and reagents used in the examples of the present invention are purchased conventionally, unless otherwise specified.

### Example 1

A positive-electrode material has a chemical formula of Na_{0.93} [Mn_{0.40}Fe_{0.28}Ni_{0.24}Zn_{0.07}Li_{0.01}]O₂.

The aforesaid positive-electrode material may be prepared by the following manufacturing method:
S1, a precursor Mn_{0.40}Fe_{0.28}Ni_{0.24}(OH)_{1.84} was prepared by a coprecipitation method according to a stoichiometric ratio of the positive-electrode material; and
S2, the precursor Mn_{0.40}Fe_{0.28}Ni_{0.24}(OH)_{1.84} (the valance of Mn in the precursor was +2) in S1 and Na₂CO₃, Li₂CO₃, and ZnO were ball-milled and mixed well (a rotary speed of the ball milling was 350 rpm/min and a ball-milling duration was 15 h), and then calcinated at 930°C in an air atmosphere for 15 h, to obtain the Na_{0.93} [Mn_{0.40}Fe_{0.28}Ni_{0.24}Zn_{0.07}Li_{0.01}]O₂.

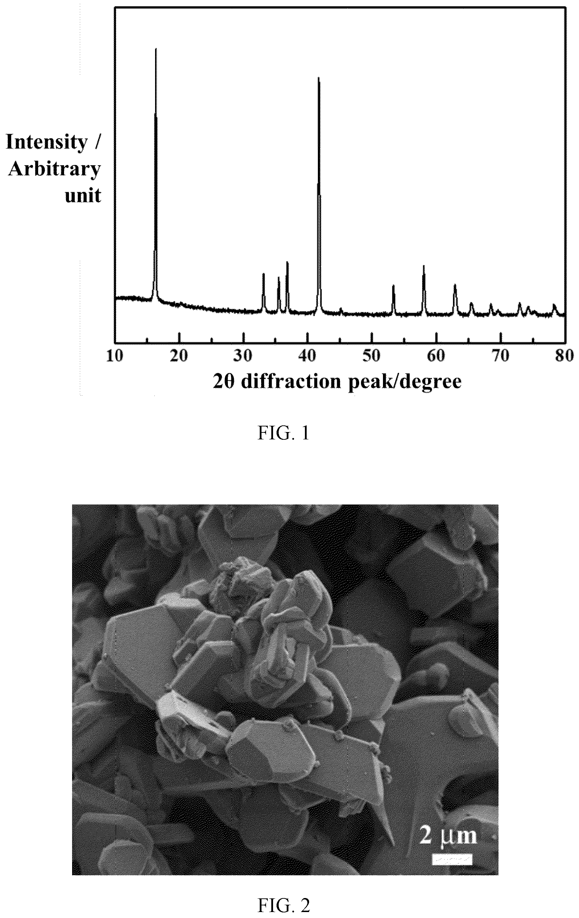

The aforesaid positive-electrode material was detected, and the obtained XRD pattern is shown in FIG. 1. As can be seen from FIG. 1, the positive-electrode material present an O3 phase. Moreover, the XRD pattern is analyzed to determine that all the Zn²⁺ are located at the site Wyckoff 3b, and all the Li⁺ are located at the site Wyckoff 4c. Meanwhile, as can be seen from SEM analysis, the positive-electrode material has a particle size D50 of 4-8 µm (as shown in FIG. 2). The section (cross section) of the above positive-electrode material is subjected to energy disperse spectroscopy (EDS) line scanning and plane scanning; it is found through analysis that Mn, Fe, and Ni are randomly distributed within the lattices; the content of Li and Zn within the lattices gradually decreases from outside to inside, and Li and Zn show an ordered and gradient distribution.

### Example 2

A positive-electrode material has a chemical formula of Na_{0.94[}Mn_{0.40}Fe_{0.28}Ni_{0.24}Zn_{0.06}Li_{0.02}]O₂.

The aforesaid positive-electrode material may be prepared by the following manufacturing method:
S1, a precursor Mn_{0.40}Fe_{0.28}Ni_{0.24}(OH)_{1.84} was prepared by a coprecipitation method according to a stoichiometric ratio of the positive-electrode material; and
S2, the precursor Mn_{0.40}Fe_{0.28}Ni_{0.24}(OH)_{1.84} in S1, sodium acetate, lithium acetate, and ZnO were ball-milled and mixed well (a rotary speed of the ball milling was 350 rpm/min and a ball-milling duration was 15 h), and then calcinated at 930°C in an air atmosphere for 15 h, to obtain the Na_{0.94}[Mn_{0.40}Fe_{0.28}Ni_{0.24}Zn_{0.06}Li_{0.02}]O₂.

By detection, the positive-electrode material has properties similar to those of the positive-electrode material in Example 1. The positive-electrode material presents an O3 phase and has a particle size D50 of 4-8 µm.Moreover, the XRD pattern is analyzed to determine that all the Zn²⁺ are located at the site Wyckoff 3b, and all the Li⁺ are located at the site Wyckoff 4c. The section (cross section) of the aforesaid positive-electrode material is subjected to EDS line scanning and plane scanning; it is found through analysis that Mn, Fe, and Ni are randomly distributed within lattices; the content of Li and Zn within the lattices gradually decreases from outside to inside, and Li and Zn show an ordered and gradient distribution.

### Example 3

A positive-electrode material has a chemical formula of Na_{0.95}[Mn_{0.39}Fe_{0.28}Ni_{0.25}Zn_{0.07}Li_{0.01}]O₂.

The aforesaid positive-electrode material may be prepared by the following manufacturing method:
S1, a precursor Mn_{0.39}Fe_{0.28}Ni_{0.25}(CO₃)_{0.92} was prepared by a coprecipitation method according to a stoichiometric ratio of the positive-electrode material; and
S2, the precursor Mn_{0.39}Fe_{0.28}Ni_{0.25}(CO₃)_{0.92} in S1, sodium oxalate, Li₂CO₃, and zinc acetate were ball-milled and mixed well (a rotary speed of the ball milling was 350 rpm/min and a ball-milling duration was 15 h), and then calcinated at 930°C in an air atmosphere for 15 h, to obtain the Na_{0.95}[Mn_{0.39}Fe_{0.28}Ni_{0.25}Zn_{0.07}Li_{0.01}]O₂.

By detection, the positive-electrode material has properties similar to those of the positive-electrode material in Example 1. The positive-electrode material presents an O3 phase and has a particle size D50 of 4-8 µm.Moreover, the XRD pattern is analyzed to determine that all the Zn²⁺ are located at the site Wyckoff 3b, and all the Li⁺ are located at the site Wyckoff 4c. The section (cross section) of the aforesaid positive-electrode material is subjected to EDS line scanning and plane scanning; it is found through analysis that Mn, Fe, and Ni are randomly distributed within lattices; the content of Li and Zn within the lattices gradually decreases from outside to inside, and Li and Zn show an ordered and gradient distribution.

### Example 4

A positive-electrode material has a chemical formula of Na_{0.93}[Mn_{0.39}Fe_{0.30}Ni_{0.23}Zn_{0.07}Li_{0.01}]O₂.

The aforesaid positive-electrode material may be prepared by the following manufacturing method:
S1, a precursor Mn_{0.39}Fe_{0.30}Ni_{0.23}(C₂O₄)_{0.92} was prepared by a coprecipitation method according to a stoichiometric ratio of the positive-electrode material; and
S2, the precursor Mn_{0.39}Fe_{0.30}Ni_{0.23}(C₂O₄)_{0.92} in S1, Na₂CO₃, Li₂CO₃, and zinc acetate were ball-milled and mixed well (a rotary speed of the ball milling was 350 rpm/min and a ball-milling duration was 15 h), and then calcinated at 930°C in an air atmosphere for 15 h, to obtain the Na_{0.93}[Mn_{0.39}Fe_{0.30}Ni_{0.23}Zn_{0.07}Li_{0.01}]O₂.

By detection, the positive-electrode material has properties similar to those of the positive-electrode material in Example 1. The positive-electrode material presents an O3 phase and has a particle size D50 of 4-8 µm.Moreover, the XRD pattern is analyzed to determine that all the Zn²⁺ are located at the site Wyckoff 3b, and all the Li⁺ are located at the site Wyckoff 4c. The section (cross section) of the aforesaid positive-electrode material is subjected to EDS line scanning and plane scanning; it is found through analysis that Mn, Fe, and Ni are randomly distributed within lattices; the content of Li and Zn within the lattices gradually decreases from outside to inside, and Li and Zn show an ordered and gradient distribution.

### Example 5

A positive-electrode material has a chemical formula of Na_{0.95}[Mn_{0.39}Fe_{0.28}Cu_{0.01}Ni_{0.24}Zn_{0.07}Li_{0.01}]O₂.

The aforesaid positive-electrode material may be prepared by the following manufacturing method:
S1, a precursor Mn_{0.39}Fe_{0.28}Cu_{0.01}Ni_{0.24}(OH)_{1.84} was prepared by a coprecipitation method according to a stoichiometric ratio of the positive-electrode material; and
S2, the precursor Mn_{0.39}Fe_{0.28}Cu_{0.01}Ni_{0.24}(OH)_{1.84} in S1, Na₂CO₃, Li₂CO₃, and zinc acetate were ball-milled and mixed well (a rotary speed of the ball milling was 350 rpm/min and a ball-milling duration was 15 h), and then calcinated at 930°C in an air atmosphere for 15 h, to obtain the Na_{0.95}[Mn_{0.39}Fe_{0.28}Cu_{0.01}Ni_{0.24}Zn_{0.07}L1_{0.01}]O₂.

By detection, the positive-electrode material has properties similar to those of the positive-electrode material in Example 1. The positive-electrode material presents an O3 phase and has a particle size D50 of 4-8 µm.Moreover, the XRD pattern is analyzed to determine that all the Zn²⁺ are located at the site Wyckoff 3b, and all the Li⁺ are located at the site Wyckoff 4c. The section (cross section) of the aforesaid positive-electrode material is subjected to EDS line scanning and plane scanning; it is found through analysis that Mn, Fe, and Ni are randomly distributed within lattices; the content of Li and Zn within the lattices gradually decreases from outside to inside, and Li and Zn show an ordered and gradient distribution.

### Example 6

A positive-electrode material has a chemical formula of Na_{0.95}[Mn_{0.39}Fe_{0.27}Co_{0.01}Ni_{0.25}Zn_{0.07}L1_{0.01}]O₂.

The aforesaid positive-electrode material may be prepared by the following manufacturing method:
S1, a precursor Mn_{0.39}Fe_{0.27}Co_{0.01}Ni_{0.25}(CO₃)_{0.92} was prepared by a coprecipitation method according to a stoichiometric ratio of the positive-electrode material; and
S2, the precursor Mn_{0.39}Fe_{0.27}Co_{0.01}Ni_{0.25}(CO₃)_{0.92} in S1, Na₂CO₃, Li₂CO₃, and zinc acetate were ball-milled and mixed well (a rotary speed of the ball milling was 350 rpm/min and a ball-milling duration was 15 h), and then calcinated at 930°C in an air atmosphere for 15 h, to obtain the Na_{0.95}[Mn_{0.39}Fe_{0.27}Co_{0.01}Ni_{0.25}Zn_{0.07}L1_{0.01}]O₂.

By detection, the positive-electrode material has properties similar to those of the positive-electrode material in Example 1. The positive-electrode material presents an O3 phase and has a particle size D50 of 4-8 µm. Moreover, the XRD pattern is analyzed to determine that all the Zn²⁺ are located at the site Wyckoff 3b, and all the Li⁺ are located at the site Wyckoff 4c. The section (cross section) of the aforesaid positive-electrode material is subjected to EDS line scanning and plane scanning; it is found through analysis that Mn, Fe, and Ni are randomly distributed within lattices; the content of Li and Zn within the lattices gradually decreases from outside to inside, and Li and Zn show an ordered and gradient distribution.

### Comparative Example 1

A positive-electrode material has a chemical formula of Na[Mn_{0.40}Fe_{0.28}Ni_{0.24}Li_{0.08}]O₂.

The aforesaid positive-electrode material may be prepared by the following manufacturing method:
S1, a precursor Mn_{0.40}Fe_{0.28}Ni_{0.24}(OH)_{1.84} was prepared by a coprecipitation method according to a stoichiometric ratio of the positive-electrode material; and
S2, the precursor Mn_{0.40}Fe_{0.28}Ni_{0.24}(OH)_{1.84} in S1, Na₂CO₃, and Li₂CO₃ were ball-milled and mixed well (a rotary speed of the ball milling was 350 rpm/min and a ball-milling duration was 15 h), and then calcinated at 930°C in an air atmosphere for 15 h, to obtain the Na[Mn_{0.40}Fe_{0.28}Ni_{0.24}Li_{0.08}]O₂.

The aforesaid positive-electrode material is not doped with Zn, and the Zn is replaced by Li. By XRD pattern analysis, Li⁺ is located at the site Wyckoff 3b.

### Comparative Example 2

A positive-electrode material has a chemical formula of Na_{0.92}[Mn_{0.40}Fe_{0.28}Ni_{0.24}Zn_{0.08}]O₂.

The aforesaid positive-electrode material may be prepared by the following manufacturing method:
S1, a precursor Mn_{0.40}Fe_{0.28}Ni_{0.24}(OH)_{1.84} was prepared by a coprecipitation method according to a stoichiometric ratio of the positive-electrode material; and
S2, the precursor Mn_{0.40}Fe_{0.28}Ni_{0.24}(OH)_{1.84} in S1, Na₂CO₃, and ZnO were ball-milled and mixed well (a rotary speed of the ball milling was 350 rpm/min and a ball-milling duration was 15 h), and then calcinated at 930°C in an air atmosphere for 15 h, to obtain the Na_{0.92}[Mn_{0.40}Fe_{0.28}Ni_{0.24}Zn_{0.08}]O₂.

The aforesaid positive-electrode material is not doped with Li and the Li is replaced by Zn.

### Comparative Example 3

A positive-electrode material has a chemical formula of Na_{0.99}[Mn_{0.51}Ni_{0.41}Zn_{0.07}Li_{0.01}]O₂.

The manufacturing method of the aforesaid positive-electrode material is the same as that in Example 1. The positive-electrode material is not doped with Fe; the Fe is replaced by Ni and Mn. Through analysis that the section (cross section) of the positive-electrode material is subjected to EDS line scanning and plane scanning, elements Ni and Mn show a partially ordered distribution.

### Comparative Example 4

A positive-electrode material has a chemical formula of Na_{0.93}[Mn_{0.40}Fe_{0.28}Ni_{0.24}Mg_{0.07}Li_{0.01}]O₂.

The manufacturing method of the aforesaid positive-electrode material is the same as that in Example 1. The positive-electrode material is not doped with Zn, and the Zn is replaced by Mg. Through analysis that the section (cross section) of the positive-electrode material is subjected to EDS line scanning and plane scanning, the content of the Li and Mg gradually decreases from outside to inside within the lattices, and Li and Mg shows a random and gradient distribution. By XRD pattern analysis, Mg²⁺ is located at the site Wyckoff 3b and Li⁺ is located at the site Wyckoff 3b.

### Comparative Example 5

A positive-electrode material has a chemical formula of Na_{0.93}[Mn_{0.40}Fe_{0.28}Ni_{0.24}Zn_{0.07}K_{0.01}]O₂.

The manufacturing method of the aforesaid positive-electrode material is the same as that in Example 1. The positive-electrode material is not doped with Li, and the Li is replaced by K. Through analysis that the section (cross section) of the positive-electrode material is subjected to EDS line scanning and plane scanning, K and Zn have an even content distribution within lattices and presents a random distribution. By XRD pattern analysis, Zn²⁺ is located at the site Wyckoff 3b and K⁺ is located at the site Wyckoff 3b.

### Comparative Example 6

A positive-electrode material has a chemical formula of Na_{0.90}[Mn_{0.40}Fe_{0.28}Cu_{0.24}Zn_{0.07}Li_{0.01}]O₂.

The manufacturing method of the aforesaid positive-electrode material is the same as that in Example 1. The positive-electrode material is not doped with Ni, and the Ni is replaced by Cu. Through analysis that the section (cross section) of the positive-electrode material is subjected to EDS line scanning and plane scanning, the elements Cu, Fe, and Mn present a partially ordered distribution. By XRD pattern analysis, Zn²⁺ is located at the site Wyckoff 3b and Li⁺ is located at the site Wyckoff 3b.

### Comparative Example 7

A positive-electrode material has a chemical formula of Na_{0.96}[Mn_{0.40}Fe_{0.28}Ni_{0.19}Zn_{0.09}Li_{0.04}]O_{2.}

The manufacturing method of the aforesaid positive-electrode material is the same as that in Example 1. Compared with the positive-electrode material in Example 1, the proportions of Zn and Li are increased, and the proportion of Ni is reduced. By XRD pattern analysis, Li⁺ is not completely located at the site Wyckoff 4c but is partially located at the site Wyckoff 3b.

### Comparative Example 8

A positive-electrode material has a chemical formula of Na_{0.93} [Mn_{0.40}Fe_{0.28}Ni_{0.24}Zn_{0.07}Li_{0.01}]O₂.

The aforesaid positive-electrode material may be prepared by the following manufacturing method:
Na₂CO₃, Mn₃O₄, Fe₂O₃, NiO, ZnO, and Li₂CO₃ were directly ball-milled and mixed well (a rotary speed of the ball milling was 350 rpm/min and a ball-milling duration was 15 h) according to the stoichiometric ratio of the positive-electrode material, and then calcinated at 930°C in an air atmosphere for 15 h, to obtain the Na_{0.93} [Mn_{0.40}Fe_{0.28}Ni_{0.24}Zn_{0.07}Li_{0.01}]O₂.

From the XRD pattern analysis of the aforesaid positive-electrode material, it may be determined that the Zn²⁺ is located at the site Wyckoff 3b, and Li⁺ is not completely located at the site Wyckoff 4c but is partially located at the site Wyckoff 3b. Meanwhile, through analysis that the section (cross section) of the positive-electrode material is subjected to EDS line scanning and plane scanning, Zn and Li in the positive-electrode material present a random and even distribution within the lattices.

### Performance test

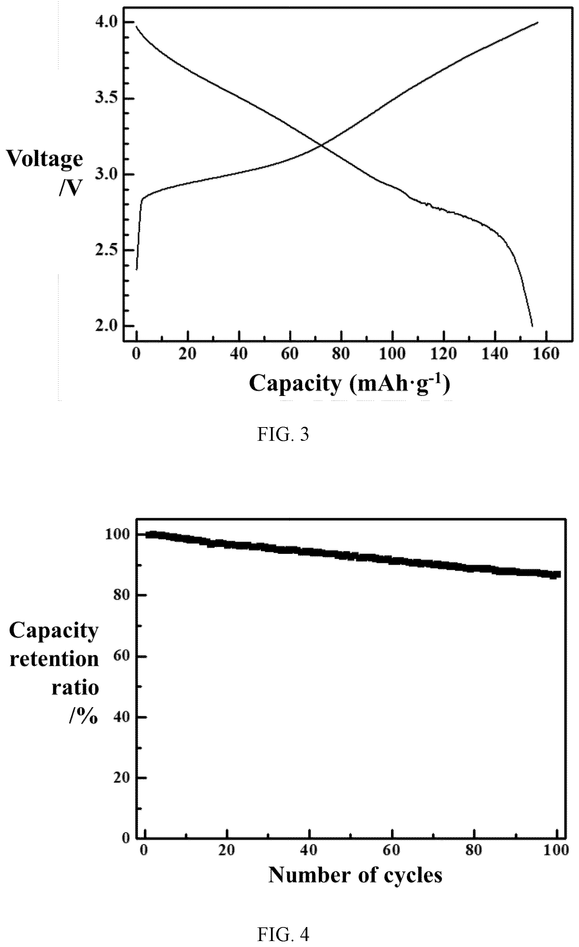

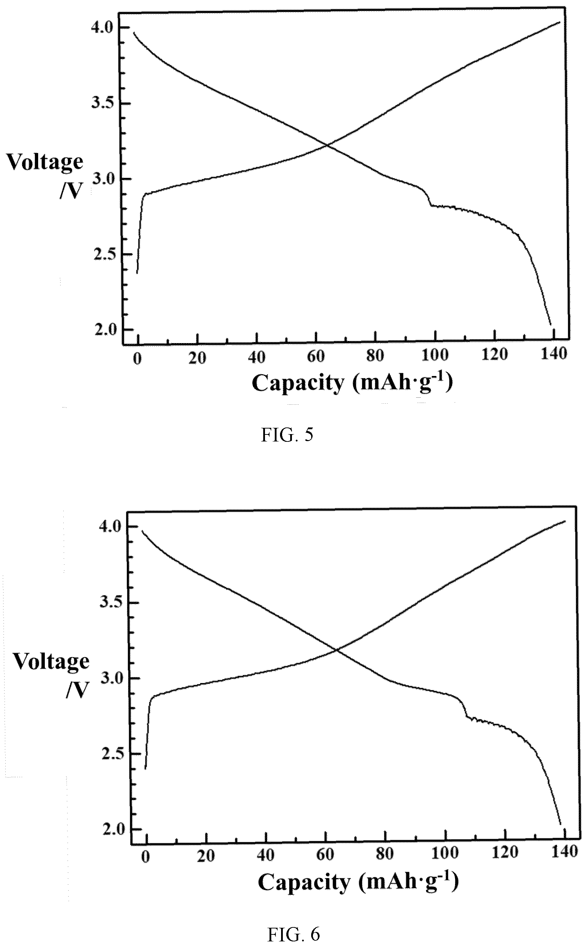

Each of the positive-electrode materials in Examples 1-6 and Comparative Examples 1-8 was made into a positive-electrode plate, respectively; meanwhile, metal sodium served as a negative-electrode plate, a glass fiber served as a separator, a propylene carbonate (PC)/ethyl methyl carbonate (EMC) of 1M NaPF₆ served as an electrolyte solution, with the addition of fluorinated ethylene carbonate (FEC) being 4% of the aforesaid electrolyte solution in weight, and then the above materials were assembled into a button cell for charge-discharge tests. The material was subjected to 100 times of charge-discharge cycles at a current density of 15 mA/g (0.1 C), a voltage range of 2-4 V, and 1 C. The test results are shown in Table 1 and FIGS. 3-6.

**Table 1 Capacity and capacity retention ratio after 100 times of cycles of the positive-electrode material in each example and comoarative example**

| No. | | Chemical formula of the positive-electrode material | Discharge capacity at 0.1 C (mAh/g) | Capacity retention ratio after 100 times of charge-discharge cycles |
|---|---|---|---|---|
| Example | 1 | Na_{0.93}[Mn_{0.40}Fe_{0.28}Ni_{0.24}Zn_{0.07}Li_{0.01}]O₂ | 154.6 | 87 |
| | 2 | Na_{0.94}[Mn_{0.40}Fe_{0.28}Ni_{0.24}Zn_{0.06}Li_{0.02}]O₂ | 154.9 | 89 |
| | 3 | Na_{0.95}[Mn_{0.39}Fe_{0.28}Ni_{0.24}Zn_{0.07}Li_{0.01}]O₂ | 152.1 | 88 |
| | 4 | Na_{0.93}[Mn_{0.39}Fe_{0.30}Ni_{0.23}Zn_{0.07}Li_{0.01}]O₂ | 153.2 | 88 |
| | 5 | Na_{0.95}[Mn_{0.39}Fe_{0.28}Cu_{0.01}Ni_{0.24}Zn_{0.07}Li_{0.01}]O₂ | 156.1 | 90 |
| | 6 | Na_{0.95}[Mn_{0.39}Fe_{0.27}Co_{0.01}Ni_{0.25}Zn_{0.07}Li_{0.01}]O₂ | 153.8 | 89 |
| Comparative Example | 1 | Na[Mn_{0.40}Fe_{0.28}Ni_{0.24}Li_{0.08}]O₂ | 139.0 | 81 |
| | 2 | Na_{0.92}[Mn_{0.40}Fe_{0.28}Ni_{0.24}Zn_{0.08}]O₂ | 138.6 | 80 |
| | 3 | Na_{0.99}[Mn_{0.51}Ni_{0.41}Zi_{0.07}Li_{0.01}]O₂ | 129.6 | 73 |
| | 4 | Na_{0.93}[Mn_{0.40}Fe_{0.28}Ni_{0.24}Mg_{0.07}Li_{0.01}]O₂ | 131.4 | 76 |
| | 5 | Na_{0.93}[Mn_{0.40}Fe_{0.28}Ni_{0.24}Zn_{0.07}K_{0.01}]O₂ | 130.5 | 78 |
| | 6 | Na_{0.90}[Mn_{0.40}Fe_{0.28}Cu_{0.24}Zn_{0.07}Li_{0.01}]O₂ | 126.8 | 84 |
| | 7 | Na_{0.96}[Mn_{0.40}Fe_{0.28}Ni_{0.19}Zn_{0.09}Li_{0.04}]O₂ | 141.5 | 82 |
| | 8 | Na_{0.93}[Mn_{0.40}Fe_{0.28}Ni_{0.24}Zn_{0.07}Li_{0.01}]O₂ | 144.6 | 83 |

As can be seen from the test results of Table 1, as for the sodium-ion battery assembled by the positive-electrode plate made from the positive-electrode material of the present invention, its capacity is up to 152.1-156.1 mAh/g under a condition of a voltage of 2-4V and 0.1C; moreover, the capacity retention ratio after 100 times of charge-discharge cycles is up to 87%-90%, indicating that the positive-electrode material of the present invention has high capacity and excellent cyclic stability. In the meantime, as can be seen from the test results of Example 1, Comparative Example 1, Comparative Example 2, and Comparative Examples 4-5, the ordered and synergistic doping of Li and Zn may effectively improve the capacity and cyclic stability of the positive-electrode material. As can be seen from the test results of Example 1 and Comparative Example 8, the gradient doping of Li and Zn may further improve the capacity and cyclic stability of the positive-electrode material. As can be seen from the test results of Examples 1-6 and Comparative Example 3, when M contains more than 2 active elements, the synergistic effect of the doped elements may effectively improve the capacity and cyclic stability of the product such that the maximum capacity of the positive-electrode material within 2-4 V may be up to 156.1 mAh/g, and the capacity retention ratio after 100 times of cycles is up to 90%. As can be seen from the test results of Examples 1-6 and Comparative Examples 6-7, when M contains Ni and the content of Ni is controlled strictly, the positive-electrode material has a higher specific capacity and longer cycle life.

FIGS. 3, 5, and 6 show charging-discharging curves of Example 1, and Comparative Examples 1- 2, respectively. As can be seen from the figures, the charging-discharging curve of the positive-electrode material in Example 1 is smooth and free of steps; the charging-discharging curve of the positive-electrode material in Comparative Example 1 is not smooth and has a step nearby 2.8 V; and the charging-discharging curve of the positive-electrode material in Comparative Example 2 is not smooth and also has a step nearby 2.8 V. It indicates that there exist irreversible unfavourable phase transformations and the Jahn-Teller effect of Mn³⁺. Meanwhile, it can be seen from FIG. 4 that the positive-electrode material in Example 1 has excellent cyclic stability.

Obviously, the aforesaid examples of the present invention are merely for the clear description of the examples numerated in the present invention, but are not construed as limiting the embodiments of the present invention. Those skilled in the art could make other different forms of changes or alterations on the basis of the aforesaid description. All the embodiments need and could not be numerated exhaustively here. Any amendment, equivalent replacement, improvement, etc. made within the spirit and principle of the present invention shall fall within the protection scope of the claims of the present invention.

## Claims

1. A positive-electrode material, presenting an O3 phase, and having a chemical formula of NaₙMn_{1-x-y-z}MₓZn_{y}Li_{z}O₂; wherein M is at least one of Cu²⁺, Ni²⁺, Cr²⁺, Fe³⁺, and Co²⁺;
wherein, 0.5 ≤ x ≤ 0.6, 0.05 ≤ y ≤ 0.1, 0.005 ≤ z ≤ 0.05, 0.9 ≤ n ≤ 1.1, and x, y, z, and n meet a principle of electroneutrality numerically; and
in the NaₙMn_{1-x-y-z}MₓZn_{y}Li_{z}O₂, all the elements Zn are located at a site Wyckoff 3b in a form of Zn²⁺, and all the elements Li are located at a site Wyckoff 4c in a form of Li⁺.

2. The positive-electrode material according to claim 1, wherein elements Mn and M in the NaₙMn_{1-x-y-z}MₓZn_{y}Li_{z}O₂ are randomly distributed within lattices.

3. The positive-electrode material according to claim 1, wherein the positive-electrode material is a monocrystal structure.

4. The positive-electrode material according to claim 3, wherein the positive-electrode material has a particle size D50 of 4-8 µm.

5. The positive-electrode material according to claim 1, wherein the M is at least two of Cu²⁺, Ni²⁺, Cr²⁺, Fe³⁺, and Co²⁺.

6. The positive-electrode material according to claim 5, wherein the M is at least two of Cu²⁺, Ni²⁺, Cr²⁺, Fe³⁺, and Co²⁺, and one of them is Ni.

7. The positive-electrode material according to claim 6, wherein a molar ratio of the Ni to (M + Mn) is (0.23-0.29): 1.

8. A method for manufacturing the positive-electrode material according to any one of claims 1-7, comprising the following steps:
S1, mixing and co-precipitating a manganese-containing compound and an element M-containing compound to obtain a precursor; and
S2, mixing the precursor in the S1 with a sodium-containing compound, a lithium-containing compound, and a zinc-containing compound well, and performing a high temperature solid-phase reaction to obtain the positive-electrode material;
wherein the element M in the S1 is at least one of Cu, Ni, Cr, Fe, and Co.

9. The manufacturing method according to claim 8, wherein the high temperature solid-phase reaction is performed at a temperature of 650-1,000°C for a duration of 10-20 h.

10. The manufacturing method according to claim 8, wherein the precursor is at least one of a hydroxide, a carbonate, and an oxalate.

11. The manufacturing method according to claim 8, wherein the sodium-containing compound is at least one of sodium carbonate, sodium acetate, and sodium oxalate;
the zinc-containing compound is at least one of zinc acetate, zinc oxalate, zinc carbonate, and zinc oxide; and
the lithium-containing compound is at least one of lithium acetate, lithium oxalate, lithium carbonate, and lithium hydrate.

12. Use of the positive-electrode material according to any one of claims 1-7 in a sodium-ion battery.

13. A positive-electrode plate, comprising a current collector and a positive-electrode active material layer disposed on at least one side of the current collector, wherein the positive-electrode active material layer comprises the positive-electrode material according to any one of claims 1-7.

14. A sodium-ion battery, comprising a positive-electrode plate, a negative-electrode plate, a separator located between the positive-electrode plate and the negative-electrode plate, and an electrolyte solution, wherein the positive-electrode plate comprises the positive-electrode material according to any one of claims 1-7.
